# EUROPÄISCHE PATENTSCHRIFT

(11) **EP 2 643 874 B1**
(45) Veröffentlichungstag und Bekanntmachung des Hinweises auf die Patenterteilung: **03.06.2020**
(21) Anmeldenummer: 11776387.0
(22) Anmeldetag: 06.10.2011
(51) Int. Cl.: H01M 4/38, H01M 4/134, H01M 10/0525, H01M 4/1395, H01M 4/36

(54) **NANOFASERN UMFASSENDES ANODENMATERIAL FÜR EINE LITHIUMIONENZELLE**
ANODE MATERIAL COMPRISING NANOFIBRES FOR A LITHIUM-ION CELL
MATÉRIAU D'ANODE COMPRENANT DES NANOFIBRES POUR UN ÉLÉMENT LITHIUM-ION

(30) Priorität: 26.11.2010 DE 102010062006
(43) Veröffentlichungstag der Anmeldung: 02.10.2013
(73) Patentinhaber: Robert Bosch GmbH, 70442 Stuttgart (DE)
(72) Erfinder: HACKENBERG, Juergen, 74343 Sachsenheim (DE); MOCK, Ulrike, 75177 Pforzheim (DE); WALTHER, Benjamin, 70199 Stuttgart (DE); ZEITLER, Ingo, 74379 Ingersheim (DE)
(86) Internationale Anmeldenummer: PCT/EP2011/067436
(87) Internationale Veröffentlichungsnummer: WO 2012/069245

(56) Entgegenhaltungen:
- WO-A1-2009/033015
- US-A1- 2008 261 116
- US-A1- 2009 176 159
- US-A1- 2009 186 267
- WANG ET AL: "Electrospun carbon-cobalt composite nanofiber as an anode material for lithium ion batteries", SCRIPTA MATERIALIA, ELSEVIER, AMSTERDAM, NL, vol. 58, no. 5, 13 November 2007 (2007-11-13), pages 405-408, XP022411382, ISSN: 1359-6462, DOI: 10.1016/J.SCRIPTAMAT.2007.10.024
- WANG L ET AL: "Electrospinning synthesis of C/Fe3O4 composite nanofibers and their application for high performance lithium-ion batteries", JOURNAL OF POWER SOURCES, ELSEVIER SA, CH, vol. 183, no. 2, 1 September 2008 (2008-09-01), pages 717-723, XP025677394, ISSN: 0378-7753, DOI: 10.1016/J.JPOWSOUR.2008.05.079 [retrieved on 2008-06-07]
- WANG L ET AL: "A novel carbon@?silicon composite nanofiber prepared via electrospinning as anode material for high energy-density lithium ion batteries", JOURNAL OF POWER SOURCES, ELSEVIER SA, CH, vol. 195, no. 15, 1 August 2010 (2010-08-01), pages 5052-5056, XP026991281, ISSN: 0378-7753 [retrieved on 2010-02-23]

## Beschreibung

Die vorliegende Erfindung betrifft ein Anodenmaterial, ein galvanisches Element und ein Verfahren zu deren Herstellung.

### Stand der Technik

Derzeit kommerziell verfügbare Lithiumionenzellen besitzen meist Graphitanoden, die während des Lade- und Entladevorgangs reversibel Lithium ein- und auslagern können. Die maximale Kapazität von Graphit ist jedoch durch die maximal einlagerbare Lithiummenge begrenzt und liegt bei etwa 370 mAh/g. Dieses Potential wird von modernen Lithiumionenzellen mit reinen Graphitanoden annähernd ausgereizt. Daher besteht ein Bedarf an neuartigen Anodenmaterialien.

Bei der Gestaltung von neuartigen Anodenmaterialien steht zum einen eine hohe Leistungsdichte, zum anderen eine hohe Zyklenstabilität des Materials im Vordergrund. Um im Kraftfahrzeugbereich Anwendung zu finden, sollte eine Lithiumionenzelle eine hohe Stromdichte und thermische Stabilität sowie eine Zyklenstabilität von etwa 3000 Zyklen aufweisen.

So ist aus der US 2009/176159 A1, der WO 2009/033015 A1 und der US 2008/261116 A1 ein Anodenmaterial eines galvanischen Elements zu entnehmen, welches Nanofasern umfasst.

Weiterhin ist aus der US 2009/186267 A1 ein Anodenmaterial zu entnehmen, das Silizium in poröser Form umfasst.

Darüber hinaus sind den Publikationen WANG ET AL: "Electrospun carboncobalt composite nanofiber as an anode material for lithium ion batteries", SCRIPTA MATERIALIA, ELSEVIER; AMSTERDAM; NL; Bd. 58, Nr. 5, 13. November 2007 (2007-11-13), Seiten 405-408, XP022411382, ISSN: 1359-6462; WANG L ET AL: "Electrospinning synthesis of C/Fe304 composite nanofibers and their application for hight performance lithium-ion batteries", JOURNAL OF POWER SOURCES; ELSEVIER SA; CH, Bd. 183, Nr. 2, 1. September 2008 (2008-09-01), Seiten 717-723, XP025677394, ISSN: 0378-7753 und WANG L ET AL: "A novel carbon-silicon composite nanofiber prepared via electrospinning as anode material for high energy-density lithium ion batteries", JOURNAL OF POWER SOURCES, ELSEVIER SA, CH, Bd. 195, Nr. 15, 1. August 2010 (2010-08-01), Seiten 5052-5056, XP026991281, ISSN: 0378-7753 Anodenmaterialien für galvanische Elemente, die Kohlenstoffkompositverbundstoffe umfassen, zu entnehmen.

### Offenbarung der Erfindung

Gegenstand der vorliegenden Erfindung ist ein Anodenmaterial beziehungsweise ein Material für eine negative Elektrode für ein galvanisches Element, insbesondere eine Lithiumionenzelle, welches Nanofasern aus einem Metall, einer Metalllegierung, einem Kohlenstoff-Metalloxid-Verbundwerkstoff, einem Kohlenstoff-Metall-Verbundwerkstoff, einem Kohlenstoff-Metalllegierungs-Verbundwerkstoff, einem leitfähigen Polymer, einem Polymer-Metall-Verbundwerkstoff, einem Polymer-Metalllegierungs-Verbundwerkstoff oder einem Verbundwerkstoff davon, umfasst, und wobei der Raum zwischen den Nanofasern mit einem Aerogel gefüllt ist.

Unter Nanofasern werden im Rahmen der vorliegenden Erfindung Fasern verstanden, deren durchschnittlicher Faserdurchmesser ≤1000 nm und deren durchschnittliches Aspektverhältnis größer 200:1 ist. Unter dem Aspektverhältnis wird dabei das Verhältnis von der Faserlänge zum Faserdurchmesser verstanden.

Unter dem Begriff Kohlenstoff werden im Rahmen der vorliegenden Erfindung Modifikationen von (reinem) Kohlenstoff, insbesondere durch Pyrolyse erhältliche Kohlenstoffmodifikationen, verstanden. Kohlenstoffverbindungen, wie Polymere, in denen Kohlenstoff mit anderen Elementen, beispielsweise Wasserstoff, verbunden ist, werden Rahmen der vorliegenden Erfindung nicht unter dem Begriff Kohlenstoff verstanden.

Derartige Nanofasern können vorteilhafterweise eine hohe elektrische Leitfähigkeit aufweisen. Zusätzlich zu ihrer eigenen hohen elektrischen Leitfähigkeit können Nanofasern die innere Leitfähigkeit des Anodenmaterials deutlich verbessern, da die Nanofasern aufgrund ihres großen Aspektverhältnisses eine große Oberfläche aufweisen und daher Aktivmaterial, welches zwischen, in oder auf den Nanofasern angeordnet ist, besonders gut elektrisch kontaktieren und Strom besonders gut zu diesem zuleiten beziehungsweise von diesem ableiten können. Zudem können derartige Nanofasern gut an anodischen Stromableitermaterialien, wie Kupfer, anbinden. Darüber hinaus kann durch ein Geflecht beziehungsweise Vlies beziehungsweise Netzwerk aus derartigen Nanofasern der Elektrolyt sehr gut hindurch diffundieren. So können vorteilhafterweise hohe Stromdichten erzielt werden. Darüber hinaus können die Nanofasern Volumenausdehnungen bei der Lithiuminsertion kompensieren, was sich vorteilhaft auf die Zyklenstabilität und thermische Stabilität auswirkt.

Die Nanofasern können beispielsweise einen durchschnittlichen Durchmesser in einem Bereich von ≥ 5 nm bis ≤ 1000 nm, insbesondere von ≥ 50 nm bis ≤ 1000 nm, zum Beispiel von ≥ 50 nm bis ≤ 200 nm, und/oder eine durchschnittliche Faserlänge von mehr als 1 cm, beispielsweise von mehr als 10 cm, aufweisen. Gegebenenfalls können die Nanofasern eine durchschnittliche Faserlänge von mehreren Metern oder mehreren hundert Metern oder sogar mehreren Kilometern aufweisen. Das durchschnittliche Aspektverhältnis der Nanofasern kann insbesondere größer 500:1, beispielsweise größer 1000:1 oder größer 5000:1 oder größer 10000:1, sein. Insbesondere können die Nanofasern durch Elektrospinnen, auch Elektrospinning genannt, hergestellt sein.

Im Rahmen einer Ausführungsform umfasst das Anodenmaterial die Nanofasern als Nanofasergeflecht und/oder Nanofaservlies und/oder Nanofasernetzwerk. Auf diese Weise kann vorteilhafterweise eine nanofaserige, dreidimensionale, poröse Anodenstruktur mit einer großen Oberfläche hergestellt werden. Die Porosität des Nanofasergeflechts beziehungsweise Nanofaservlieses beziehungsweise Nanofasernetzwerks kann vorteilhafterweise bis zu 95 Volumenprozent betragen. Vorteilhafterweise können dabei große Porenräume zwischen den einzelnen Nanofasern beispielsweise für Lösungsmittel und Elektrolyte gut zugänglich sein. Zudem stellt dieses Geflecht/Vlies/Netzwerk auch ein elektrisch leitendes, poröses Nanonetzwerk dar, welches vorteilhafterweise als eine dreidimensionale Vergrößerung des Stromableiters wirken kann.

Im Rahmen einer weiteren Ausführungsform umfassen die Nanofasern ein lithiierbares Material. Insbesondere kann das Metall oder die Metalllegierung oder das Metalloxid der Nanofasern beziehungsweise des Verbundwerkstoffs der Nanofasern lithiierbar sein.

Unter einem lithiierbaren Material, insbesondere einem lithiierbarem Metall oder einer lithiierbaren Metalllegierung oder einem lithiierbaren Metalloxid oder lithiierbaren Nanopartikeln, kann im Rahmen der vorliegenden Erfindung insbesondere ein Material, insbesondere ein Metall oder eine Metalllegierung oder ein Metalloxid lithiierbare Nanopartikel, verstanden werden, in welches Lithium insertieren beziehungsweise einlagern kann.

Beispiele für lithiierbare Metalle beziehungsweise Metalllegierungen sind Silicium, Zinn und Nickel-Zinn-Legierungen.

In Silicium kann Lithium insbesondere gemäß den folgenden Reaktionsgleichungen ein- und wieder ausgelagert werden:

*Si* + 4,4*Li*⁺ + 4,4*e⁻* → *L*_{4,4}*Si*

*L*_{4,4}*Si* → *Si* + 4,4*Li*⁺ + 4,4*e⁻*

In Zinn kann Lithium insbesondere gemäß den folgenden Reaktionsgleichungen ein- und wieder ausgelagert werden:

*Sn* + 4,4*Li*⁺ + 4,4*e⁻* → *L*_{4,4}*Sn*

*L*_{4,4}*Sn* → *Sn* + 4,4*Li*⁺ + 4,4*e*⁻

In eine Nickel-Zinn-Legierung kann Lithium während der ersten Ladung des Systems insbesondere gemäß der Folgenden Reaktionsgleichungen eingelagert werden:

*Ni₃Sn*₄ + 17,6*Li*⁺ + 17,6*e*⁻ → 4*L*_{4,4}*Sn* + 3*Ni*

Während der ersten Ladung des Systems erfolgt insbesondere eine irreversible Umstrukturierung der metallischen Phase, wobei vormals als Platzhalter fungierende Nickelatome durch Lithiumatome unter verminderter Quellung ersetzt werden. Aus dieser irreversiblen Umwandlung resultiert insbesondere eine poröse Struktur, die Volumenänderungen des während der Lithiumaufnahme beziehungsweise -abgabe puffern kann. Die anschließenden Entlade- beziehungsweise Ladeprozesse erfolgen dann entsprechend den im Zusammenhang mit Zinn erläuterten Reaktionsgleichungen. Das aus der Legierung verdrängte Nickel kann dabei als Kontaktvermittler fungieren.

Beispiele für lithiierbare Metalloxide sind SnO₂, Fe₃0₄, Fe₂0₃ und TiO₂. Ein weiteres Beispiel für ein lithiierbares Material ist Kohlenstoff.

Durch Nanofasern aus einem lithiierbaren Metall, einer lithiierbaren Metalllegierung, einem Kohlenstoff-Metalloxid-Verbundwerkstoff mit einem lithiierbaren Metalloxid, einem Kohlenstoff-Metall-Verbundwerkstoff mit einem lithiierbaren Metall, einem Kohlenstoff-Metalllegierungs-Verbundwerkstoff mit einer lithiierbaren Metalllegierung, einem Polymer-Metall-Verbundwerkstoff mit einem lithiierbaren Metall, einem Polymer-Metalllegierungs-Verbundwerkstoff mit einer lithiierbaren Metalllegierung oder Verbundwerkstoffe davon können zusätzlich zu den bereits erläuterten elektrischen Leitfähigkeitseigenschaften die Lithiuminsertionskapazität und damit die Gesamtkapazität, die Zyklenstabilität und die thermische Stabilität des galvanischen Elements verbessert werden. Aufgrund des hohen Aspektverhältnisses der Nanofasern sind dabei vorteilhafterweise Volumenausdehnungseffekte bei der Lithiuminsertion vernachlässigbar gering.

Im Rahmen einer weiteren Ausführungsform sind die Nanofasern aus einem lithiierbarem Metall oder einer lithiierbaren Metalllegierung ausgebildet.

Im Rahmen einer weiteren Ausführungsform sind die Nanofasern aus Silicium, Zinn oder einer Nickel-Zinn-Legierung ausgebildet. Durch ein derartiges Anodenmaterial können vorteilhafterweise Kapazitäten von bis zu annährend 4200 mAh/g im Fall von Silicium und von bis zu annährend 990 mAh/g im Fall von Zinn erzielt werden.

Im Rahmen einer weiteren Ausführungsform sind die Nanofasern aus einem Polymer-Metall- oder Polymer-Metalllegierungs-Verbundwerkstoff beziehungsweise Hybridmaterial ausgebildet. Vorzugsweise wird auch dabei ein lithiierbares Metall, insbesondere Silicium oder Zinn, oder eine lithiierbare Metalllegierung, insbesondere eine Nickel-Zinn-Legierung, eingesetzt. Als Polymer wird dabei vorzugsweise ein elektrisch leitfähiges Polymer eingesetzt werden.

Im Rahmen einer weiteren Ausführungsform sind die Nanofasern aus einem Kohlenstoff-Metalloxid-Verbundwerkstoff ausgebildet. Vorzugsweise wird auch dabei ein lithiierbares Metalloxid oder eine Mischung aus mehreren lithiierbaren Metalloxiden als Metalloxid eingesetzt. Dies hat den Vorteil, dass sowohl der Kohlenstoff als auch das lithiierbare Metalloxid Lithium insertieren kann und eine hohe Lithiuminsertionskapazität erzielt werden kann. Beispielsweise können dabei Fe₃0₄, Fe₂0₃, TiO₂, SnO₂ und Kombinationen davon als Metalloxid eingesetzt werden. Derartige Kohlenstoff-Metalloxid-Verbundwerkstoffe können beispielsweise durch Pyrolyse einer metallsalzhaltigen, beispielsweise durch Elektrospinnen erhaltenen, Polymer-Nanofaser, beispielsweise Polyacrylnitrid-Nanofaser, hergestellt sein. Durch die Pyrolyse kann dabei das Polymer in Kohlenstoff und gegebenenfalls das Metallsalz in ein Metalloxid, beispielsweise Fe₃O₄, umgewandelt werden. Durch den Kohlenstoff des Verbundwerkstoffs kann vorteilhafterweise der Zusammenhalt der aus dem Verbundwerkstoff ausgebildeten Nanofaser erhöht und deren Stromleitfähigkeit verbessert werden.

Im Rahmen einer weiteren Ausführungsform sind die Nanofasern aus einem Kohlenstoff-Metall- oder Kohlenstoff-Metalllegierungs-Verbundwerkstoff ausgebildet. Vorzugsweise wird auch dabei ein lithiierbares Metall oder eine lithiierbare Metalllegierung eingesetzt. Dies hat den Vorteil, dass sowohl der Kohlenstoff als auch das lithiierbare Metall beziehungsweise die lithiierbare Metalllegierung Lithium insertieren kann und eine hohe Lithiuminsertionskapazität erzielt werden kann. Vorzugsweise wird auch dabei als Metall Silicium oder Zinn beziehungsweise als Metalllegierung eine Nickel-Zinn-Legierung eingesetzt. Derartige Kohlenstoff-Metall- beziehungsweise Kohlenstoff-Metalllegierungs-Verbundwerkstoff-Nanofasern können beispielsweise durch Pyrolyse von metallsalzhaltigen, beispielsweise durch Elektrospinnen erhaltenen, Polymer-Nanofasern, beispielsweise Polyacrylnitrid-Nanofasern, hergestellt sein. Durch die Pyrolyse kann dabei das Polymer in Kohlenstoff und gegebenenfalls das Metallsalz in ein Metall oder eine Metalllegierung umgewandelt werden. Durch den Kohlenstoff des Verbundwerkstoffs kann vorteilhafterweise auch hierbei der Zusammenhalt der aus dem Verbundwerkstoff ausgebildeten Nanofaser erhöht und deren Stromleitfähigkeit verbessert werden.

Im Rahmen einer weiteren Ausführungsform sind die Nanofasern aus einem leitfähigen Polymer ausgebildet. Dabei kann unter dem Begriff Polymer insbesondere verstanden werden, dass das Polymer eine oder zwei oder mehr Polymerarten und gegebenenfalls Additive umfassen kann. Derartige Nanofasern sind vorzugsweise mit einem lithiierbaren Material beschichtet.

Im Rahmen einer weiteren Ausführungsform weisen die Nanofasern eine Beschichtung aus einem lithiierbaren Material auf. So kann vorteilhafterweise die zur Lithiuminsertion zur Verfügung stehende aktive Oberfläche und damit die Kapazität und Stromdichte - verglichen mit Folien aus lithiierbaren Materialien - um ein Vielfaches erhöht werden. Vorzugsweise sind die Nanofasern im Wesentlichen vollständig mit der Beschichtung bedeckt beziehungsweise überzogen beziehungsweise ummantelt. Dabei bedeutet im Wesentlichen, dass diejenigen Oberflächenbereiche einer Nanofaser, welche eine andere Nanofaser oder einen anderen Teilbereich derselben Nanofaser direkt kontaktieren, nicht mit der Beschichtung bedeckt beziehungsweise überzogen sein können. Dies kann beispielsweise vorliegen, wenn sich Nanofasern bereits vor dem Ausbilden der Beschichtung kontaktieren.

Die Beschichtung der Nanofasern kann beispielsweise elektrochemisch oder außenstromlos, zum Beispiel durch elektrophoretische Abscheidung, Nanopartikelabscheidung und/oder Vakuumverfahren, wie physikalische oder chemische Gasphasenabscheidung (PVD: physical vapour deposition, CVD: chemical vapour deposition), hergestellt sein.

Zum Beispiel können die Nanofasern aus einem nicht lithiierbaren Material, beispielsweise Kupfer oder einem leitfähigen Polymer, ausgebildet sein und eine Beschichtung aus einem lithiierbaren Material aufweisen. Oder die Nanofasern können aus einem ersten lithiierbaren Material ausgebildet sein und eine Beschichtung aus einem zweiten, vom ersten unterschiedlichen lithiierbaren Material aufweisen.

Im Rahmen einer weiteren Ausführungsform weisen die Nanofasern eine Beschichtung aus Silicium, Zinn oder einer Nickel-Zinn-Legierung auf.

Im Rahmen einer weiteren Ausführungsform weisen die Nanofasern eine Beschichtung mit einer durchschnittlichen Schichtdicke in einem Bereich von ≥ 5 nm bis ≤ 3 µm, beispielweise von ≥ 50 nm bis ≤ 3 µm, auf. Die optimale Schichtdicke kann vom gewählten System abhängig sein. Sie sollte daher auf das System abgestimmt werden und nicht zu groß gewählt werden, um quellungsbedingte Spannungsrisse während der Zyklisierung zu vermeiden.

Erfindungsgemäss ist der Raum zwischen den Nanofasern mit einem, insbesondere elektrisch leitfähigen, Aerogel gefüllt. Auf diese Weise kann die elektrische Leitfähigkeit des Anodenmaterials weiter erhöht werden, insbesondere da der Elektronentransport nur über kurze Strecken zur nächsten Nanofaser und von dort mit einer guten elektrischen Leitfähigkeit zum Stromableiter erfolgt.

Im Rahmen einer weiteren Ausführungsform umfasst das Aerogel lithiierbare Nanopartikel. So kann vorteilhafterweise die Gesamtkapazität weiter erhöht werden. Die lithiierbaren Nanopartikel sind vorzugsweise in den Poren des Aerogels fixiert. Während der Lithiuminsertion können sich die Nanopartikel so vorteilhafterweise innerhalb der Poren ausdehnen, wodurch vorteilhafterweise eine Volumenausdehnung des gesamten Systems kompensiert werden kann. Im Rahmen dieser Ausführungsform können die Nanofasern sowohl aus einem lithiierbaren Material als auch aus einem nicht lithiierbaren Material, beispielsweise aus Kupfer oder einem elektrisch leitfähigen Polymer, ausgebildet sein. Vorzugsweise sind die Nanofasern aus einem lithiierbaren Material ausgebildet. So kann vorteilhafterweise die Lithiuminsertionskapazität optimiert werden.

Im Rahmen einer weiteren Ausführungsform umfasst das Aerogel Nanopartikel aus einem lithiierbaren Metall oder einer lithiierbaren Metalllegierung. Vorzugsweise umfasst das Aerogel lithiierbare Nanopartikel aus einem lithiierbaren Metall oder einer lithiierbaren Metalllegierung, welche ausgewählt ist aus der Gruppe bestehend aus Silizium, Zinn, Nickel-Zinn-Legierungen und Mischungen davon.

Das Aerogel kann sowohl ein Aerogel auf einer organischen Basis als auch auf einer anorganischen Basis sein. Beispielsweise kann das Aerogel ein Kohlenstoffbasiertes Aerogel sein. Es ist jedoch ebenso möglich, dass das Aerogel ein anorganisches Aerogel ist.

Zur Verbesserung der elektrischen Leitfähigkeit beziehungsweise der inneren Leitfähigkeit kann das Aerogel weiterhin elektrisch leitfähige, beispielsweise dotierte, Nanopartikel und/oder Leitkohlenstoff umfassen. Insbesondere kann ein anorganisches Aerogel elektrisch leitfähige, beispielsweise dotierte, Nanopartikel und/oder Leitkohlenstoff umfassen.

Hinsichtlich weiterer Merkmale und Vorteile wird hiermit explizit auf die Erläuterungen im Zusammenhang mit dem erfindungsgemäßen galvanischen Element, dem erfindungsgemäßen Verfahren und der Figurenbeschreibung verwiesen.

Ein weiterer Gegenstand der vorliegenden Erfindung ist ein galvanisches Element, insbesondere eine Lithiumionenzelle, welche ein erfindungsgemäßes Anodenmaterial umfasst.

Die Nanofasern des Anodenmaterials können dabei zumindest zum Teil mit dem anodischen Stromableiter elektrisch und mechanisch verbunden sein. Dies kann beispielsweise dadurch gewährleistet werden, dass die Nanofasern des Anodenmaterials direkt auf dem anodischen Stromableiter, beispielsweise aus Kupfer, insbesondere durch Elektrospinnen, hergestellt sind. So kann vorteilhafterweise die Anbindung der Nanofasern an den Stromableiter und damit die Stromleitfähigkeit des galvanischen Elements verbessert werden. Insbesondere kann das galvanische Element eine Anode (negative Elektrode), eine Kathode (positive Elektrode) und einen Separator aufweisen, wobei die Anode das erfindungsgemäße Anodenmaterial umfasst.

Hinsichtlich weiterer Merkmale und Vorteile wird hiermit explizit auf die Erläuterungen im Zusammenhang mit dem erfindungsgemäßen Anodenmaterial, dem erfindungsgemäßen Verfahren und der Figurenbeschreibung verwiesen.

Ein weiterer Gegenstand der vorliegenden Erfindung ist ein Verfahren zur Herstellung eines erfindungsgemäßen Anodenmaterials beziehungsweise eines erfindungsgemäßen galvanischen Elementes.

Im Rahmen einer Ausführungsform des Verfahrens, insbesondere zur Herstellung von Nanofasern aus einem Metall, einer Metalllegierung, einem leitfähigen Polymer, einem Polymer-Metall-Verbundwerkstoff oder einem Polymer-Metalllegierungs-Verbundwerkstoff, umfasst das Verfahren den Verfahrensschritt:
- Elektrospinnen von Nanofasern aus einem Material, welches mindestens ein in ein Metall oder eine Metalllegierung umwandelbares Metallsalz und/oder mindestens ein elektrisch leitfähiges Polymer oder eine in ein elektrisch leitfähiges Polymer umwandelbare Polymer-Vorstufe umfasst.

Das Umwandeln des Metallsalzes in ein Metall oder eine Metalllegierung beziehungsweise der Polymer-Vorstufe in das Polymer kann insbesondere durch Erhitzen der Nanofasern erfolgen. Im Rahmen dieser Ausführungsform erfolgt das Erhitzen der Nanofasern vorzugsweise derart, dass zwar das Metallsalz in das Metall oder die Metalllegierung beziehungsweise die Polymer-Vorstufe in das Polymer umgewandelt wird, jedoch das Polymer nicht zu Kohlenstoff umgewandelt wird.

Im Rahmen einer anderen Ausführungsform des Verfahrens, insbesondere zur Herstellung von Nanofasern aus einem Kohlenstoff-Metalloxid-Verbundwerkstoff, einem Kohlenstoff-Metall-Verbundwerkstoff oder einem Kohlenstoff-Metalllegierungs-Verbundwerkstoff, umfasst das Verfahren die Verfahrensschritte:
Elektrospinnen von Nanofasern aus einem Material, welches mindestens ein in ein Metalloxid oder ein Metall oder eine Metalllegierung umwandelbares Metallsalz und mindestens ein Polymer oder eine in ein Polymer umwandelbare Polymer-Vorstufe umfasst, und
- Erhitzen, insbesondere Pyrolysieren, der Nanofasern derart, dass das Polymer zu Kohlenstoff umgewandelt wird.
Vorzugsweise umfasst das Polymer im Rahmen dieser Ausführungsform Polyacrylnitrid oder eine Polyacrylnitrid-Vorstufe.

Es ist möglich beim Elektrospinnen gleichzeitig eine Vielzahl von Nanofasern herzustellen.

Durch das Elektrospinnen kann direkt ein Nanofasergeflecht beziehungsweise Nanofaservlies beziehungsweise Nanofasernetzwerk erzeugt werden.

Es ist jedoch möglich, dass das Verfahren noch einen weiteren Verfahrensschritt:
- Verarbeiten der Nanofasern zu einem Nanofasergeflecht beziehungsweise einem Nanofaservlies beziehungsweise Nanofasernetzwerk,
umfasst.

Im Rahmen einer weiteren Ausführungsform wird ein Stromableiter als Elektrode beim Elektrospinnen eingesetzt. So können die Nanofasern direkt auf den Stromableiter gesponnen werden, wodurch vorteilhafterweise die Anbindung der Nanofasern an den Stromableiter und damit die Stromleitfähigkeit verbessert werden kann. Dabei kann gleichermaßen ein Nanofasergeflecht beziehungsweise ein Nanofaservlies beziehungsweise Nanofasernetzwerk aus den Fasern ausgebildet werden.

Im Rahmen einer weiteren Ausführungsform umfasst das Verfahren den Verfahrensschritt:
- Beschichten der Nanofasern mit einem lithiierbaren Material.

Das Beschichten der Nanofasern kann beispielsweise elektrochemisch oder außenstromlos, zum Beispiel durch elektrophoretische Abscheidung, Nanopartikelabscheidung und/oder Vakuumverfahren, wie physikalische oder chemische Gasphasenabscheidung (PVD: physical vapour deposition, CVD: chemical vapour deposition), erfolgen.

Im Rahmen einer weiteren Ausführungsform umfasst das Verfahren den Verfahrensschritt:
- Füllen des Raums zwischen den Nanofasern mit einer, in ein Aerogel umwandelbaren, lithiierbare Nanopartikel umfassenden Aerogel-Vorstufe.

Das Aerogel wird vorzugsweise durch einen Sol-Gel-Prozess hergestellt. Grundsätzlich kann die Aerogel-Vorstufe beziehungsweise das Aerogel sowohl auf einer organischen als auch einer anorganischen Basis beruhen. Beispielsweise kann ein organisches beziehungsweise Kohlenstoffbasiertes Aerogel dadurch hergestellt werden, dass beispielsweise ein Resorcin-Formaldehyd-Gemisch zunächst geliert, gegebenenfalls getrocknet und anschließend getempert wird. Nach dem Tempern kann so aus der Aerogel-Vorstufe eine poröse vernetzte, elektrisch leitfähige und lithiierbares Kohlenstoffbasiertes Aerogel erhalten werden, in dessen Poren gegebenenfalls lithiierbare Nanopartikel fixiert sein können, welche bei der Lithiumaufnahme in der porösen Struktur quellen können, ohne dass es zu einer Beschädigung beziehungsweise Dekontaktierung der Matrix kommt.

Vorzugsweise umfasst die Aerogel-Vorstufe beziehungsweise das Aerogel lithiierbare Nanopartikel. Insbesondere kann die Aerogel-Vorstufe beziehungsweise das Aerogel Nanopartikel aus einem lithiierbaren Metall oder einer lithiierbaren Metalllegierung, insbesondere ausgewählt aus der Gruppe bestehend aus Silizium, Zinn, Nickel-Zinn-Legierungen und Mischungen davon, umfassen.

Weiterhin kann die Aerogel-Vorstufe beziehungsweise das Aerogel elektrisch leitfähige, beispielsweise dotierte, Nanopartikel, und/oder Leitkohlenstoff zur Verbesserung der elektrischen Leitfähigkeit, beispielsweise von anorganischen Aerogelen, umfassen.

Darüber hinaus ist es möglich lithiierbare Nanopartikel, beispielsweise Nanopartikel aus Silizium, Zinn und/oder einer Nickel-Zinn-Legierung, durch einen Temperprozess nachträglich in die Poren des Aerogels einzubringen und dort zu fixieren.

Hinsichtlich weiterer Merkmale und Vorteile wird hiermit explizit auf die Erläuterungen im Zusammenhang mit dem erfindungsgemäßen Anodenmaterial, dem erfindungsgemäßen galvanischen Element und der Figurenbeschreibung verwiesen.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1a: eine schematische, perspektivische Ansicht einer lithiierbaren, metallischen Nanofaser;
- Fig. 1b: eine schematische, perspektivische Ansicht einer lithiierbaren Nanofaser aus einem Kohlenstoff-Metalloxid-Verbundwerkstoff;
- Fig. 2: eine schematische, perspektivische Ansicht einer Nanofaser mit einer Beschichtung aus einem lithiierbaren Material;
- Fig. 3: eine schematische, perspektivische Ansicht eines Nanofasergeflechts beziehungsweise Nanofaservlieses beziehungsweise Nanofasernetzwerks auf einem anodischen Stromableiter;
- Fig. 4a: einen schematische Querschnitte durch ein Anodenmaterial, welches ein Nanofasergeflecht beziehungsweise Nanofaservlies beziehungsweise Nanofasernetzwerk aus lithiierbaren Nanofasern umfasst, wobei die Zwischenräume zwischen den Nanofasern mit einem Aerogel gefüllt sind, wobei in den Poren des Aerogels lithiierbare Nanopartikel angeordnet sind;
- Fig. 4b: einen vergrößerten Ausschnitt des in Fig. 4a gezeigten Anodenmaterials.

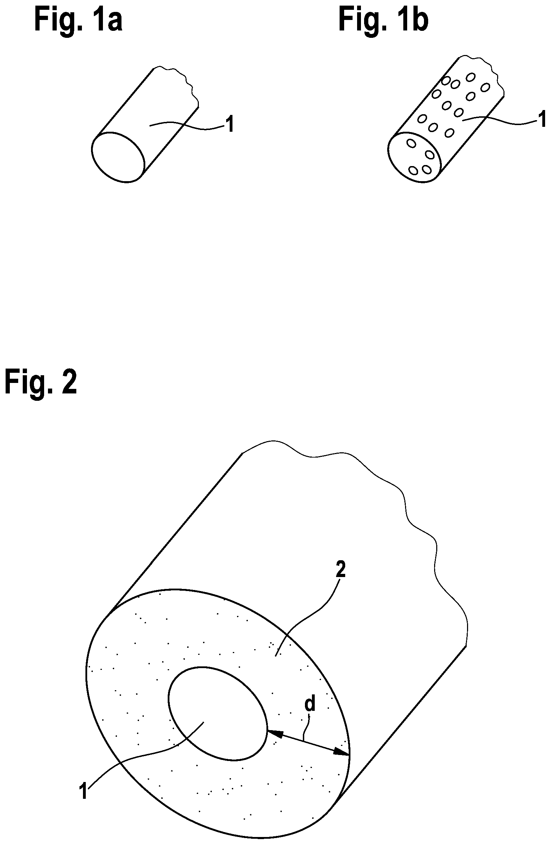

Die Figuren 1a und 1b veranschaulichen, zwei unterschiedliche Ausführungsformen von lithiierbaren Nanofasern 1, wobei Figur 1a eine lithiierbare, metallische Nanofaser 1, beispielsweise aus Silizium, Zinn oder einer Nickel-Zinn-Legierung, und Figur 1b eine lithiierbare Nanofaser 1 aus einem Kohlenstoff-Metalloxid-Verbundwerkstoff, beispielsweise mit Fe₃0₄ als lithiierbares Metalloxid, zeigt. Nanofasern aus einem Kohlenstoff-Metalloxid-Verbundwerkstoff können beispielsweise dadurch hergestellt werden, dass zunächst durch Elektrospinnen Nanofasern aus einem Material, welches mindestens ein in ein Metalloxid umwandelbares Metallsalz und mindestens ein Polymer oder eine in ein Polymer umwandelbare Polymer-Vorstufe umfasst, hergestellt werden und die Nanofasern anschließend derart erhitzt, insbesondere pyrolysiert werden, dass das Metallsalz zu einem lithiierbaren Metalloxid und das Polymer zu Kohlenstoff umgewandelt wird. Dabei kann als Polymer beispielsweise Polyacrylnitrid eingesetzt werden.

Figur 2 illustriert eine weitere Ausführungsform einer Nanofaser 1 mit einer Beschichtung 2 mit einer durchschnittlichen Schichtdicke d aus einem lithiierbaren Material, beispielsweise aus Silicium, Zinn oder einer Nickel-Zinn-Legierung. Die Nanofaser 1 selbst kann im Rahmen dieser Ausführungsform aus einem nicht lithiierbaren Material, beispielsweise Kupfer oder einem elektrisch leitfähigen Polymer ausgebildet sein.

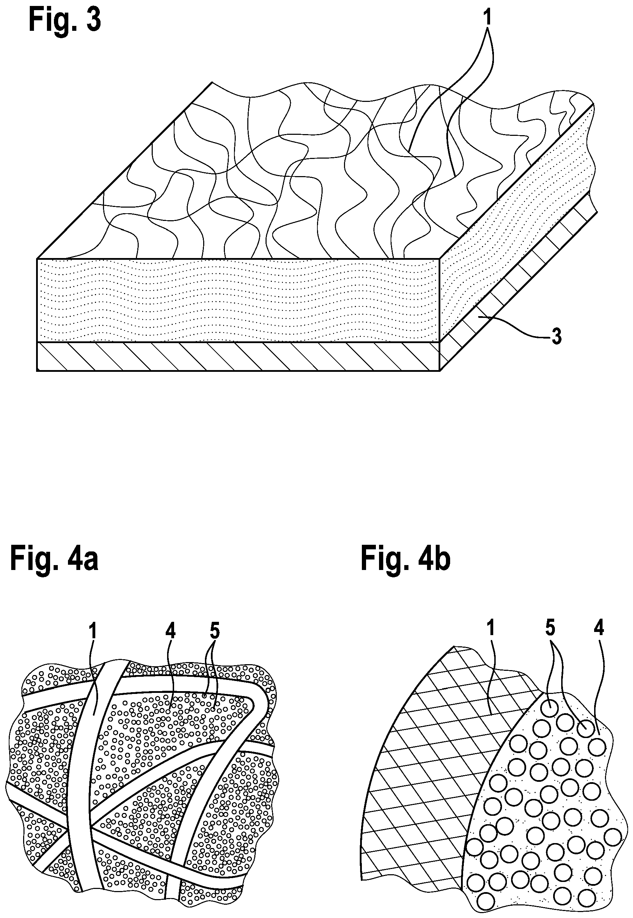

Figur 3 veranschaulicht, dass die lithiierbaren Nanofasern 1 als Nanofasergeflecht beziehungsweise Nanofaservlies beziehungsweise Nanofasernetzwerk vorliegen können. Dies kann beispielsweise dadurch erfolgen, dass die Nanofasern durch Elektrospinnen hergestellt werden, wobei ein Stromableiter 3 der herzustellenden Anode beziehungsweise des herzustellenden galvanischen Elements als Elektrode eingesetzt wird.

Die Figuren 4a und 4b zeigen eine weitere Ausführungsform eines erfindungsgemäßen Anodenmaterials, im Rahmen der das Anodenmaterial ein Nanofasergeflecht beziehungsweise Nanofaservlies beziehungsweise Nanofasernetzwerk aus lithiierbaren Nanofasern 1, beispielsweise aus Silicium, Zinn oder einer Nickel-Zinn-Legierung, umfasst, wobei die Zwischenräume zwischen den Nanofasern 1 mit einem Aerogel 4, beispielsweise einem kohlenstoffbasierten Aerogel, gefüllt sind, wobei in den Poren des Aerogels 4 lithiierbare Nanopartikel 5, beispielsweise aus Silicium, Zinn oder einer Nickel-Zinn-Legierung, angeordnet sind.

## Patentansprüche

1. Anodenmaterial für ein galvanisches Element, insbesondere eine Lithiumionenzelle, umfassend Nanofasern (1) aus einem Metall, einer Metalllegierung, einem Kohlenstoff-Metalloxid-Verbundwerkstoff, einem Kohlenstoff-Metall-Verbundwerkstoff, einem Kohlenstoff-Metalllegierungs-Verbundwerkstoff, einem leitfähigen Polymer, einem Polymer-Metall-Verbundwerkstoff, einem Polymer-Metalllegierungs-Verbundwerkstoff oder einem Verbundwerkstoff davon, **dadurch gekennzeichnet, dass** der Raum zwischen den Nanofasern (1) mit einem Aerogel (4) gefüllt ist.

2. Anodenmaterial nach Anspruch 1, **dadurch gekennzeichnet, dass** das Anodenmaterial die Nanofasern (1) als Nanofasergeflecht und/oder Nanofaservlies und/oder Nanofasernetzwerk umfasst.

3. Anodenmaterial nach Anspruch 1 oder 2, **dadurch gekennzeichnet, dass** die Nanofasern (1) ein lithiierbares Material umfassen.

4. Anodenmaterial nach einem der Ansprüche 1 bis 3, **dadurch gekennzeichnet, dass** die Nanofasern (1) aus Silicium, Zinn oder einer Nickel-Zinn-Legierung ausgebildet sind.

5. Anodenmaterial nach einem der Ansprüche 1 bis 4, **dadurch gekennzeichnet, dass** die Nanofasern (1) eine Beschichtung (2) aus einem lithiierbaren Material aufweisen.

6. Anodenmaterial nach einem der Ansprüche 1 bis 5, **dadurch gekennzeichnet, dass** die Nanofasern (1) eine Beschichtung (2) aus Silicium, Zinn oder einer Nickel-Zinn-Legierung aufweisen.

7. Anodenmaterial nach einem der Ansprüche 1 bis 6, **dadurch gekennzeichnet, dass** die Nanofasern (1) eine Beschichtung (2) mit einer durchschnittlichen Schichtdicke (d) in einem Bereich von ≥ 5 nm bis ≤ 3 µm aufweisen.

8. Anodenmaterial nach Anspruch 7, **dadurch gekennzeichnet, dass** das Aerogel (4) lithiierbare Nanopartikel (5) umfasst.

9. Anodenmaterial nach Anspruch 7 oder 8, **dadurch gekennzeichnet, dass** das Aerogel (4) lithiierbare Nanopartikel (5) aus einem lithiierbaren Metall oder einer lithiierbaren Metalllegierung umfasst, welche/s ausgewählt ist aus der Gruppe bestehend aus Silizium, Zinn, Nickel-Zinn-Legierungen und Mischungen davon.

10. Galvanisches Element, insbesondere Lithiumionenzelle, umfassend ein Anodenmaterial nach einem der Ansprüche 1 bis 9.

11. Verfahren zur Herstellung eines Anodenmaterial nach einem der Ansprüche 1 bis 9 oder eines galvanischen Element nach Anspruch 10, umfassend die Verfahrensschritte:
- Elektrospinnen von Nanofasern (1) aus einem Material, welches mindestens ein in ein Metall oder eine Metalllegierung umwandelbares Metallsalz und/oder mindestens ein elektrisch leitfähiges Polymer oder eine in ein elektrisch leitfähiges Polymer umwandelbare Polymer-Vorstufe umfasst, oder
- Elektrospinnen von Nanofasern aus einem Material, welches mindestens ein in ein Metalloxid oder ein Metall oder eine Metalllegierung umwandelbares Metallsalz und mindestens ein Polymer oder eine in ein Polymer umwandelbare Polymer-Vorstufe umfasst, und
Erhitzen, insbesondere Pyrolysieren, der Nanofasern (1) derart, dass das Polymer zu Kohlenstoff umgewandelt wird, und
- Füllen des Raums zwischen den Nanofasern (1) mit einer, in ein Aerogel umwandelbaren, lithiierbare Nanopartikel umfassenden Aerogel-Vorstufe.

12. Verfahren nach Anspruch 11, **dadurch gekennzeichnet, dass** das Polymer Polyacrylnitril oder eine Polyacrylnitril-Vorstufe umfasst.

13. Verfahren nach Anspruch 11 oder 12, **dadurch gekennzeichnet, dass** ein Stromableiter (3) als Elektrode beim Elektrospinnen eingesetzt wird.

14. Verfahren nach einem der Ansprüche 11 bis 13, **dadurch gekennzeichnet, dass** das Verfahren den Verfahrensschritt umfasst:
- Beschichten der Nanofasern (1) mit einem lithiierbaren Material.

## Claims

1. Anode material for an electrochemical element, in particular a lithium ion cell, comprising nanofibres (1) composed of a metal, a metal alloy, a carbon-metal oxide composite, a carbon-metal composite, a carbon-metal alloy composite, a conductive polymer, a polymer-metal composite, a polymer-metal alloy composite or a composite thereof, **characterized in that** the space between the nanofibres (1) is filled with an aerogel (4) .

2. Anode material according to Claim 1, **characterized in that** the anode material comprises the nanofibres (1) as nanofibre braid and/or nanofibre nonwoven and/or nanofibre network.

3. Anode material according to Claim 1 or 2, **characterized in that** the nanofibres (1) comprise a lithiatable material.

4. Anode material according to any of Claims 1 to 3, **characterized in that** the nanofibres (1) are composed of silicon, tin or a nickel-tin alloy.

5. Anode material according to any of Claims 1 to 4, **characterized in that** the nanofibres (1) have a coating (2) composed of a lithiatable material.

6. Anode material according to any of Claims 1 to 5, **characterized in that** the nanofibres (1) have a coating (2) composed of silicon, tin or a nickel-tin alloy.

7. Anode material according to any of Claims 1 to 6, **characterized in that** the nanofibres (1) have a coating (2) having an average layer thickness (d) in a range from ≥ 5 nm to ≤ 3 µm.

8. Anode material according to Claim 7, **characterized in that** the aerogel (4) comprises lithiatable nanoparticles (5).

9. Anode material according to Claim 7 or 8, **characterized in that** the aerogel (4) comprises lithiatable nanoparticles (5) composed of a lithiatable metal or a lithiatable metal alloy selected from the group consisting of silicon, tin, nickel-tin alloys and mixtures thereof.

10. Electrochemical element, in particular lithium ion cell, comprising an anode material according to any of Claims 1 to 9.

11. Process for producing an anode material according to any of Claims 1 to 9 or an electrochemical element according to Claim 10, comprising the process steps:
- electrospinning of nanofibres (1) from a material which comprises at least one metal salt which can be converted into a metal or a metal alloy and/or at least one electrically conductive polymer or a polymer precursor which can be converted into an electrically conductive polymer, or
- electrospinning of nanofibres (1) from a material which comprises at least one metal salt which can be converted into a metal oxide or a metal or a metal alloy and at least one polymer or a polymer precursor which can be converted into a polymer, and heating, in particular pyrolysis, of the nanofibres (1) in such a way that the polymer is converted into carbon, and
- filling of the space between the nanofibres (1) with an aerogel precursor which comprises the lithiatable nanoparticles and can be converted into an aerogel.

12. Process according to Claim 11, **characterized in that** the polymer comprises polyacrylonitrile or a polyacrylonitrile precursor.

13. Process according to Claim 11 or 12, **characterized in that** a power outlet lead (3) is used as electrode in the electrospinning.

14. Process according to any of Claims 11 to 13, **characterized in that** the process comprises the process step:
- coating of the nanofibres (1) with a lithiatable material.

## Revendications

1. Matériau d'anode pour un élément galvanique, notamment une cellule lithium-ion, comprenant des nanofibres (1) en un métal, un alliage métallique, un matériau composite carbone-oxyde métallique, un matériau composite carbone-métal, un matériau composite carbone-alliage métallique, un polymère conducteur, un matériau composite polymère-métal, un matériau composite polymère-alliage métallique ou un matériau composite de ceux-ci, **caractérisé en ce que** l'espace entre les nanofibres (1) est rempli avec un aérogel (4) .

2. Matériau d'anode selon la revendication 1, **caractérisé en ce que** le matériau d'anode comprend les nanofibres (1) sous la forme d'un treillis de nanofibres et/ou d'un non-tissé de nanofibres et/ou d'un réseau de nanofibres.

3. Matériau d'anode selon la revendication 1 ou 2, **caractérisé en ce que** les nanofibres (1) comprennent un matériau pouvant être lithié.

4. Matériau d'anode selon l'une quelconque des revendications 1 à 3, **caractérisé en ce que** les nanofibres (1) sont formées par du silicium, de l'étain ou un alliage de nickel-étain.

5. Matériau d'anode selon l'une quelconque des revendications 1 à 4, **caractérisé en ce que** les nanofibres (1) comprennent un revêtement (2) en un matériau pouvant être lithié.

6. Matériau d'anode selon l'une quelconque des revendications 1 à 5, **caractérisé en ce que** les nanofibres (1) comprennent un revêtement (2) en silicium, en étain ou en un alliage de nickel-étain.

7. Matériau d'anode selon l'une quelconque des revendications 1 à 6, **caractérisé en ce que** les nanofibres (1) comprennent un revêtement (2) ayant une épaisseur de couche moyenne (d) dans une plage allant de ≥ 5 nm à ≤ 3 µm.

8. Matériau d'anode selon la revendication 7, **caractérisé en ce que** l'aérogel (4) comprend des nanoparticules pouvant être lithiées (5).

9. Matériau d'anode selon la revendication 7 ou 8, **caractérisé en ce que** l'aérogel (4) comprend des nanoparticules pouvant être lithiées (5) en un métal pouvant être lithié ou en un alliage métallique pouvant être lithié, qui est choisi dans le groupe constitué par le silicium, l'étain, les alliages de nickel-étain et leurs mélanges.

10. Élément galvanique, notamment cellule lithium-ion, comprenant un matériau d'anode selon l'une quelconque des revendications 1 à 9.

11. Procédé de fabrication d'un matériau d'anode selon l'une quelconque des revendications 1 à 9 ou d'un élément galvanique selon la revendication 10, comprenant les étapes de procédé suivantes :
- le filage électrostatique de nanofibres (1) en un matériau qui comprend au moins un sel métallique transformable en un métal ou un alliage métallique, et/ou au moins un polymère électriquement conducteur ou un précurseur de polymère transformable en un polymère électriquement conducteur, ou
- le filage électrostatique de nanofibres (1) en un matériau qui comprend au moins un sel métallique transformable en un oxyde métallique ou un métal ou un alliage métallique, et au moins un polymère ou un précurseur de polymère transformable en un polymère, et le chauffage, notamment la pyrolyse, des nanofibres (1), de telle sorte que le polymère soit transformé en carbone, et
- le remplissage de l'espace entre les nanofibres (1) avec un précurseur d'aérogel comprenant des nanoparticules pouvant être lithiées, transformable en un aérogel.

12. Procédé selon la revendication 11, **caractérisé en ce que** le polymère comprend du polyacrylonitrile ou un précurseur de polyacrylonitrile.

13. Procédé selon la revendication 11 ou 12, **caractérisé en ce qu'**un collecteur de courant (3) est utilisé en tant qu'électrode lors du filage électrostatique.

14. Procédé selon l'une quelconque des revendications 11 à 13, **caractérisé en ce que** le procédé comprend l'étape de procédé suivante :
- le revêtement des nanofibres (1) avec un matériau pouvant être lithié.
